# EUROPÄISCHE PATENTSCHRIFT

(11) **EP 1 851 146 B1**
(45) Veröffentlichungstag und Bekanntmachung des Hinweises auf die Patenterteilung: **12.12.2012**
(21) Anmeldenummer: 06704083.2
(22) Anmeldetag: 25.01.2006
(51) Int. Cl.: B65G 47/84, B67C 3/24

(54) **KLAMMERGREIFER FÜR EIN GEFÄSSTRANSPORTSYSTEM**
CLAW FOR A CONTAINER TRANSPORTING SYSTEM
PINCE DE SERRAGE POUR UN SYSTEME DE TRANSPORT DE RECIPIENTS

(30) Priorität: 23.02.2005 DE 202005002924 U
(43) Veröffentlichungstag der Anmeldung: 07.11.2007
(60) Teilanmeldung: 12188685.7
(73) Patentinhaber: Krones AG, 93073 Neutraubling (DE)
(72) Erfinder: KNIELING, Erwin, 93102 Pfatter (DE); NEUMAYER, Walter, 93086 Wörth (DE)
(74) Vertreter: Grünecker, Kinkeldey, Stockmair & Schwanhäusser
(86) Internationale Anmeldenummer: PCT/EP2006/000618
(87) Internationale Veröffentlichungsnummer: WO 2006/089610

(56) Entgegenhaltungen:
- EP-A- 1 375 395
- DE-U1- 29 713 510
- SU-A1- 1 007 968
- US-A- 5 042 640
- US-B1- 6 386 609
- PATENT ABSTRACTS OF JAPAN Bd. 014, Nr. 473 (M-1035), 16. Oktober 1990 (1990-10-16) & JP 02 190229 A (SANMEI DENKI KK), 26. Juli 1990 (1990-07-26)
- PATENT ABSTRACTS OF JAPAN Bd. 1995, Nr. 01, 28. Februar 1995 (1995-02-28) & JP 06 278075 A (KAO CORP), 4. Oktober 1994 (1994-10-04)
- PATENT ABSTRACTS OF JAPAN Bd. 2000, Nr. 05, 14. September 2000 (2000-09-14) & JP 2000 061876 A (ULVAC JAPAN LTD), 29. Februar 2000 (2000-02-29)

## Beschreibung

Die Erfindung betrifft einen Klammergreifer der im Oberbegriff des Anspruchs 1 angegebenen Art.

Unter Verwendung eines Kraftspeichers von den Behältern selbst betätigte, ungesteuerte Klammergreifer sind aus DE 297 13 510 U bekannt. Der Kraftspeicher ist eine zwischen den Verlängerungen der Greiferarme wirkungsmäßig eingesetzte Spiral- oder Schraubendruckfeder. Die Feder liegt frei und greift mit ihren Enden in offene Vertiefungen in den Verlängerungen ein. Der ungesteuerte Klammergreifer wird durch die zu ergreifende und in den Klammergreifer bewegte Flasche über Einführschrägen gegen die in Richtung zur Greifstellung wirkende Kraft des Kraftspeichers geöffnet und durch die Kraft des Kraftspeichers in die Greifstellung gebracht. Zum Entnehmen der Flasche wird diese aus dem geschlossenen Klammergreifer gezogen, wobei sie über Öffnungsschrägen die Greiferarme gegen die Kraft des Kraftspeichers verschwenkt. Der Klammergreifer kehrt unter der Kraft des Federspeichers selbsttätig in die Greifstellung zurück. Behältertransportsysteme, insbesondere Flaschen-Transportsysteme, müssen hohe Anforderungen hinsichtlich der mikrobiologischen Verhältnisse und der Reinigung erfüllen, und dabei über lange Standzeiten und für sehr hohe Arbeitsfrequenzen betriebssicher sein. Körperliche Federn, wie Spiralfedern oder Gummifedern oder dgl., der Klammergreifer gemäß DE 297 13 510 U sind im Hinblick auf die Mikrobiologie und die Reinigung kritisch, weil sich dort kleine Verschmutzungen leicht absetzen, sich ferner häufig anfällig gegen aggressive Reinigungsmedien, die die Feder-Standzeit verkürzen, und können jederzeit mechanisch beschädigt werden oder brechen, wodurch die Funktionsfähigkeit des Klammergreifers beeinträchtigt wird oder verloren geht (große Gefahr, Behälter zu beschädigen). Außerdem können die Federn beim Arbeiten Abrieb oder Inhaltsstoffe absondern.

Aus EP 1 375 395 A ist ein über Nocken gesteuerter Klammergreifer bekannt, dessen beide Greiferarme in einer schwenkbaren Haltegabel um getrennte Achsen schwenkbar sind. Die über die Achsen hinausstehenden starren Verlängerungen der Greiferarme sind jeweils an einem Schwenkglied angelenkt. Die beiden Schwenkglieder haben etwa dreieckige Form und sind schwenkbeweglich über einen Zapfen gekoppelt, an welchem ein Steuernocken drehbar angeordnet ist, und der von einem mit der Haltegabel verbundenen Stößel durchsetzt wird. In jedem Schwenkglied ist ein Permanentmagnet angeordnet, der kurz vor oder bei Erreichen der Greifstellung der Greiferarme eine Anzugskraft zum Ende des Stößels entwickelt. In der Freigabestellung sind die Permanentmagneten so weit voneinander entfernt, dass sie keine gegenseitige Kraftwirkung mehr ausüben.

Aus SU 1007968 A1 ist ein gesteuerter Klammergreifer für Objekte bekannt, dessen Greiferarme an über die Achsen hinausstehenden Verlängerungen Permanentmagneten tragen. Diese Permanentmagneten weisen gegensinnige Polungen auf, d.h. der Nordpol des einen Permanentmagneten wirkt magnetisch mit dem Südpol des anderen Permanentmagneten zusammen, um die Greiferarme über eine Anziehungskraft in der Freigabestellung zu halten. Um die Greiferarme in die Greifstellung zu bringen, wird bei einer Ausführungsform ein aus zwei gegensinnig gepolten Permanentmagneten bestehender Keil mittels eines Hilfsantriebs zwischen keilförmige Aufdrückflächen der Permanentmagneten an den Greiferarm-Verlängerungen eingeschoben, um zunächst die Haftwirkung zwischen den Permanentmagneten an den Greiferarm-Verlängerungen mechanisch zu brechen, und dann unterstützt von magnetischen Abdrückkräften die Greiferarme in die Greifstellung zu schwenken. Um die Greiferarme dieser Ausführungsform wieder in die Freigabestellung zu bringen, wird das Paar keilförmiger Permanentmagneten mittels des Hilfsantriebs wieder zurückgezogen, damit die an den Greiferarm-Verlängerungen angeordneten gegensinnig gepolten Permanentmagneten einander wieder anziehen und die Greiferarme auseinanderschwenken. In der anderen Ausführungsform ist zwischen den an den Greiferarm-Verlängerungen angeordneten, gegensinnig gepolten Permanentmagneten eine Magnetspule platziert, die zum Einstellen der Greifstellung strombeaufschlagt wird und die beiden zunächst aneinander haftenden Permanentmagneten an den Greiferarm-Verlängerungen gegen deren Anziehkräfte auseinanderdrückt.

Der Erfindung liegt die Aufgabe zugrunde, einen funktionssicheren, leicht zu reinigenden, und höchste Anforderungen in mikrobiologischer Hinsicht erfüllenden ungesteuerten Klammergreifer anzugeben.

Die gestellte Aufgabe wird mit den Merkmalen des Anspruchs 1 gelöst.

Die im Kraftspeicher einander abstoßenden Permanentmagneten dieses ungesteuerten Klammergreifers, der vom Behälter selbst geöffnet wird und dessen Greiferarme durch die Permanentmagneten in Richtung zur Greifstellung beaufschlagt werden, wirken als virtuelle Feder ohne körperliche Verbindung, wobei sich die Federcharakteristik durch die Auslegung der Permanentmagneten vorbestimmen und optimieren lässt. Die Kraftentwicklung erfolgt ohne spürbaren Losbrechruck, d.h. die Abstoßkraft nimmt von einem Maximum bei maximaler Annäherung der Permanentmagneten entsprechend der Federcharakteristik ab, wenn sich die Permanentmagneten voneinander wegbewegen. Dies ist eine für Klammergreifer optimale Kraftcharakteristik. Die wesentlichen Vorteile der virtuellen, aus den sich abstoßenden Permanentmagneten gebildeten Feder bei einem Klammergreifer sind jedoch die Bruchsicherheit, das Arbeiten ohne Abrieb, die Möglichkeit, Hinterschneidungen, Winkel oder dgl. zu vermeiden, die das Festsetzen von Keimen oder Verunreinigungen begünstigen könnten, und die Unempfindlichkeit gegen gegebenenfalls aggressive Reinigungsmedien, gepaart mit minimalem Platzbedarf. Permanentmagneten sind in verschiedensten Spezifikationen und Formen mit hoher Leistungsfähigkeit kostengünstig erhältlich, was für Klammergreifer deshalb wichtig ist, weil in einem Behälter-Transportsystem eine sehr große Anzahl Klammergreifer, beispielsweise 300 oder mehr, eingesetzt werden kann.

Um bei möglichst kleinem Volumen eine hohe Leistung, einen optimierten Abstoßkraftverlauf, und selbst bei voneinander separierten Permanentmagneten noch eine wenn auch niedrigere Abstoßkraft zu erzielen, ist es zweckmäßig, wenn die Permanentmagneten überwiegend seltene Erden enthalten oder aus seltenen Erden hergestellt sind. Hierfür sind z.B. Neodym oder Samarium zweckmäßig, oder auch chemische Elemente der dritten Gruppe des Periodensystems sowie Lanthanoide. Solche Permanentmagneten zeichnen sich durch eine sehr hohe Leistungsdichte pro Flächen- oder Volumeneinheit aus.

Um Absetzräume für Keime und Verunreinigungen und schädliche Einflüsse gegebenenfalls aggressiver und mit hohem Druck eingesetzter Reinigungsmittel zu vermeiden, ist es zweckmä-βig, jeden Permanentmagneten in nicht magnetisches Material einzukapseln. Hierfür eignet sich besonders Edelstahl, der sich leicht keimfrei halten lässt.

Bei einer Ausführungsform sind die Permanentmagneten vorzugsweise derart an den starren Verlängerungen der Greiferarme angebracht, dass die Achse in etwa in der Mitte zwischen dem Greifbereich und den Permanentmagneten liegt. Die größte Kraftwirkung ist bei geöffnetem Klammergreifer gegeben. Natürlich kann die Position der Permanentmagneten in Relation zur Achse oder den Achsen auch anders und in Anpassung an die jeweiligen Betriebsverhältnisse gewählt werden.

Es kann ein Konzept zweckmäßig sein, bei dem die eben gestalteten Abstoßflächen der Permanentmagnete in der Greifstellung im Wesentlichen zueinander parallel sind, d.h. wenn die schwächste Abstoßkraft wirkt, während sie in der Greifstellung einander maximal angenähert oder sogar in gegenseitigen Kontakt gebracht sind, d.h. dann, wenn die maximale Abstoßkraft wirken soll. In der Stellung mit der geringsten Abstoßkraft können die Abstoßflächen auch einen kleinen spitzen Winkel miteinander einschließen, während ein umgekehrter spitzer Winkel zweckmäßig sein kann, wenn die Stellung für die maximale Abstoßkraft vorliegt. Mit diesem Konzept wird sichergestellt, dass die Greiferarme möglichst rasch zur Greifstellung zurückkehren, sobald der Behälter, z.B. der Hals einer Flasche, in den Greifbereich eingebracht oder aus diesem herausgeführt worden ist.

Grundsätzlich kann jeder Permanentmagnet zweckmäßig zylinderförmig und in einem Kapselgehäuse geborgen sein.

Das Kapselgehäuse ist ein Topf, beispielsweise aus Edelstahl, mit einem dünnen Topfboden, dem die Abstoßfläche des Permanentmagneten gegenüberliegt, während die offene Seite des Topfes durch einen Deckel verschlossen ist, der zweckmäßig eingeschweißt ist.

Zwischen dem Deckel und dem Permanentmagneten kann eine Füllscheibe eingesetzt sein, beispielsweise um mit einer Kapselgehäusegröße unterschiedlich große Permanentmagneten verwenden zu können, oder um den Permanentmagneten gegen den Einfluss der Schweißwärme beim Verschweißen des Deckels zu schützen.

Zweckmäßig ist die Verlängerung, an der das Kapselgehäuse angeordnet ist, gegenüber dem Greiferarm schräg abgekröpft, derart, dass das Kapselgehäuse unterhalb der Unterseite des Greiferarms bzw. unterhalb der Oberseite der Tragplatte positioniert ist, und im Betrieb des Klammergreifers möglichst wenig stört.

Anhand der Zeichnungen werden u.a. Ausführungsformen des Erfindungsgegenstandes erläutert. Es zeigen:
- Fig. 1: schematisch einen ungesteuerten Klammergreifer in einer Greifstellung,
- Fig. 2: den Klammergreifer von Fig. 1 in einer Freigabestellung,
- Fig. 3: den ungesteuerten Klammergreifer in einer Seitenansicht,
- Fig. 4: eine Perspektivansicht einer konkreten Ausführungsform eines Greiferarms des Klammergreifers der Fig. 1 bis 3,
- Fig. 5: eine Ansicht des Greiferarms in Richtung seiner Schwenkachse,
- Fig. 6: eine Teilschnittansicht in der Schnittebene VI-VI in Fig. 5,
- Fig. 7: einen mechanisch gesteuerten Klammergreifer, der nicht unter die Erfindung fällt, in einer Freigabestellung, in Draufsicht,
- Fig. 8: den Klammergreifer von Fig. 7 in der Behälter-Greifstellung, und
- Fig. 9: den Klammergreifer von Fig. 7 und Fig. 8 in einer extremen Schließstellung.

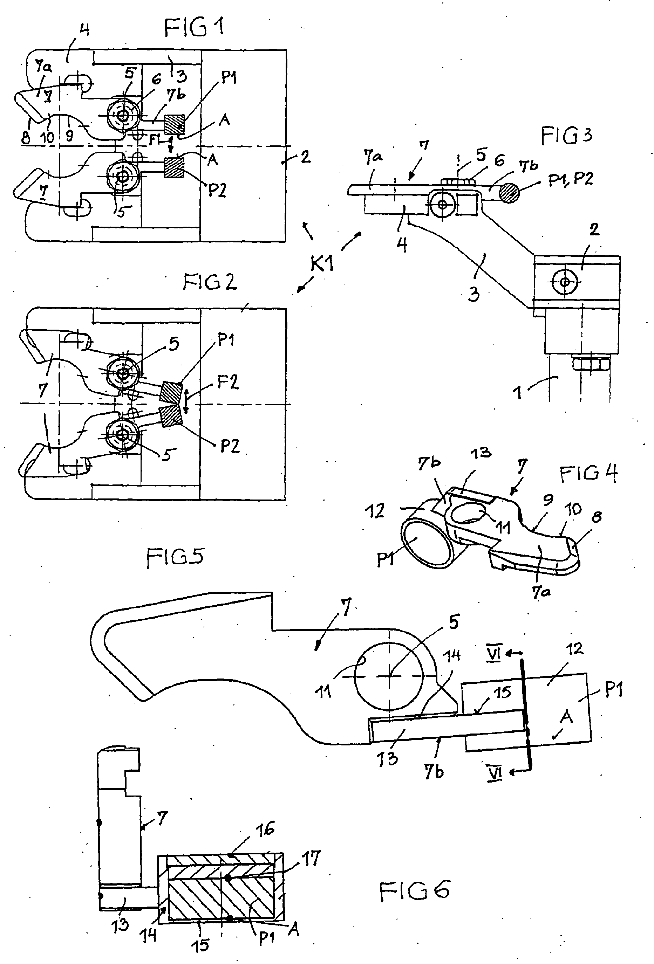

Ein in den Fig. 1 bis 3 gezeigter Klammergreifer K1 ist ein ungesteuerter Klammergreifer, der durch die Einführ- oder Entnahmebewegung eines nicht gezeigten Behälters geöffnet wird, und seine Greifstellung selbsttätig einnimmt ohne dass von außen darauf eingewirkt zu werden braucht.

Der Klammergreifer K1 ist an einer Tragstruktur 1 und einem gegebenenfalls schwenkbaren Support 2 mit einer schrägen Konsole 3 abgestützt, auf der eine Tragplatte 4 sitzt. Der Klammergreifer K1 weist zwei im Wesentlichen spiegelbildliche Greiferarme 7 auf, die, bei dieser Ausführungsform, um zwei getrennte Achsen 5, beispielsweise fixiert von Schrauben 6, gegensinnig schwenkbar sind, und zwar im Wesentlichen parallel zur Ebene der Oberseite der Tragplatte 4.

Jeder Greiferarm hat einen vorderen Greiferarmteil 7a mit einer Greifausnehmung 9, einer frontseitigen Einführschräge 8 und einer Ausführschräge 10. Die Greiferarme 7 sind über die Achsen 5 hinaus mit starren Verlängerungen 7b ausgestattet. An jeder Verlängerung 7b ist im Endbereich mindestens ein Permanentmagnet P1, P2 angebracht, wobei die beiden miteinander kooperierenden Permanentmagneten P1, P2. gegensinnig polarisiert sind, derart, dass sie einander abstoßen. Dies bedeutet, dass die Permanentmagneten P1, P2 beispielsweise mit ihren Südpolen zueinander weisen, oder mit ihren Nordpolen. Die Permanentmagneten sind unter überwiegender verwendung seltener Erden hergestellt und sehr leistungsfähig. Sie haben zweckmäßig im Wesentlichen ebene Abstoßflächen A, zwischen denen eine Abstoßkraft F1 bzw. F2 erzeugt wird, die abhängig von dem Abstand der Abstoßflächen A variiert. Bei der gezeigten Ausführungsform beaufschlagt die Abstoßkraft die Greiferarme 7 in Richtung zur Greifstellung in Fig. 1, wobei die Abstoßkraft F2 den maximalen Wert hat, wenn der Klammergreifer K1 (Fig. 2) in seiner Freigabestellung ist. Die Permanentmagneten P1, P2 sind in Schwenkrichtung um die Achsen 5 aufeinander ausgerichtet und können gegebenenfalls entlang der Verlängerungen 7b verstellbar angeordnet sein.

In der in Fig. 1 gezeigten Greifstellung sind die Abstoßflächen A im Wesentlichen zueinander parallel. In der in Fig. 2 gezeigten Freigabestellung schließen die Abstoßflächen miteinander einen sich zu den Achsen 5 öffnenden, spitzen Winkel ein und kontaktieren sich gegebenenfalls, wie gezeigt.

Bei einer alternativen Ausführungsform könnten entlang jeder Verlängerung 7b auch mehr als nur ein Permanentmagnet P1 oder P2 vorgesehen sein, um den Verlauf der Abstoßkraft so zu gestalten, dass auch in der Greifstellung in Fig. 1 noch eine beträchtliche Kraft wirkt.

Die Fig. 4 bis 6 zeigen eine konkrete Ausführungsform des in Fig. 1 mehr schematisch dargestellten, oberen Greiferarms 7. Der Greiferarm 7 weist eine Durchgangsbohrung 11 für die Achse 5 auf, und ist angrenzend an die Durchgangsbohrung 11 ausgenommen. In dieser Ausnehmung ist die Verlängerung 7b beispielsweise in Form eines abgekröpften Flachprofils 13 bei 14 eingeschweißt. Der Permanentmagnet P1 ist in einem Kapselgehäuse 12 hermetisch dicht geborgen, das wegen der Kröpfung der Verlängerung 7b unterhalb der Unterseite des Greiferarms 7 bzw. unterhalb der Oberseite der Tragplatte 4 (Fig. 3) positioniert sein kann, so dass (s. Fig. 3) im hinteren Bereich des Klammergreifers oben keine störenden oder vorstehenden Teile vorhanden sind.

Das Kapselgehäuse 12 ist beispielsweise ein Edelstahl-Topf 14 mit einem dünnwandigen Topfboden 15 und einer offenen Oberseite. Der Permanentmagnet P1 hat beispielsweise die Form eines Zylinders mit der ebenen Abstoßseite A und ist vollstandig im Kapselgehäuse 12 untergebracht. Die offene Seite des Topfes 14 ist durch einen dickwandigen Edelstahldeckel 16 verschlossen, der beispielsweise eingeschweißt ist. Zwischen dem Deckel 16 und dem Permanentmagneten P1 kann eine Füllscheibe 17 vorgesehen werden.

Fig. 5 deutet an, dass die ebene Abstoßseite des Permanentmagneten P1 geringfügig schräg nach oben angestellt ist, so dass in der in Fig. 1 gezeigten Schließstellung die beiden Abstoßflächen A miteinander einen kleinen spitzen Winkel beispielsweise kleiner 20° miteinander einschließen, der sich in Richtung von der Achse 5 weg öffnet.

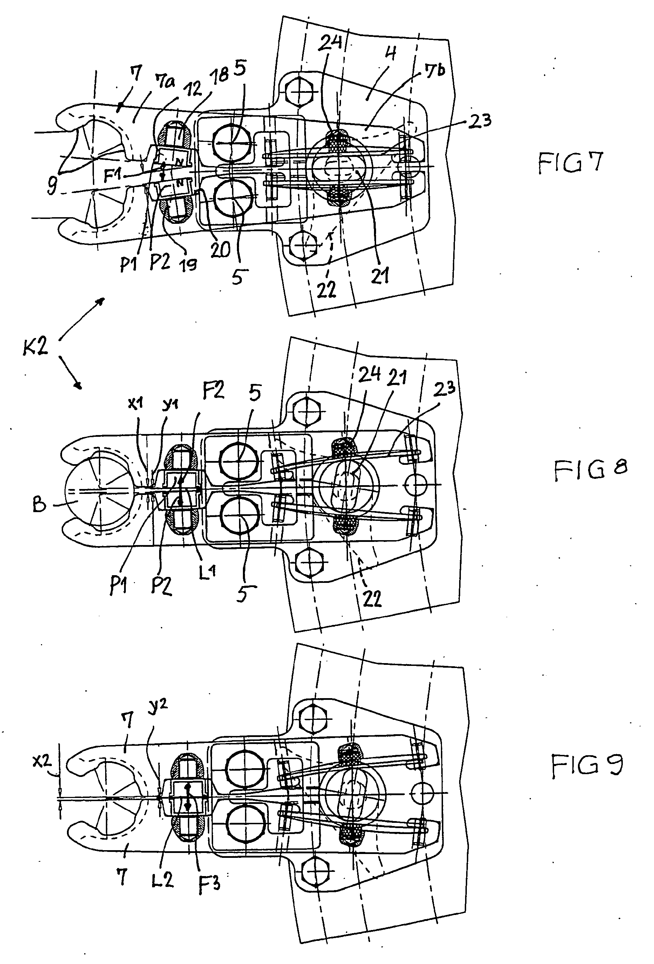

Die Fig. 7, 8 und 9 zeigen Draufsichten auf einen mechanisch gesteuerten Klammergreifer K2 in der Freigabestellung (Fig. 7), der Behälter-Greifstellung (Fig. 8) und einer extremen Schließstellung (Fig. 9) bei Abwesenheit eines Behälters B.

Der Klammergreifer K2 weist wiederum zwei im Wesentlichen spiegelbildliche Greiferarme 7 auf, die um die in dieser Ausführungsform getrennten Achsen 5 gegensinnig schwenkbar sind und über die Achsen 5 hinaus verlaufende Verlängerungen 7b haben. Der Klammergreifer K2 wird durch einen drehbaren Steuernocken 21 gesteuert, der mittels eines Antriebsnockens 22 entweder hin und her oder durchgehend drehbar ist und zwischen den Innenseiten der Verlängerungen 7b arbeitet. Zwischen dem Steuernocken 21 und den Innenseiten der Verlängerungen 7b sind ferner am Steuernocken 21 anliegende Blattfedern 23 vorgesehen, und gegebenenfalls Druckfederkissen 24. Die Blattfedern 23 und/oder die Druckfederkissen 24 verleihen dem Antriebssystem des Klammergreifers K2 eine Eigenfederung und einen permanenten Kraftübertragungs-Kontakt mit dem Steuernocken 21 und kompensieren eventuelle Maßabweichungen unter den zu ergreifenden Behältern B.

An den Innenseiten der Greiferarme 7 sind zwischen den Greifbereichen 9 und den Achsen 5 Permanentmagneten P1, P2 als Paar vorgesehen, die einander abstoßen. Gegebenfalls kann mehr als nur ein Paar Permanentmagneten P1, P2 vorgesehen sein.

Jeder Permanentmagnet P1, P2 ist zweckmäßig in dem Kapselgehäuse 12 geborgen, das mit einem Fußteil 18 in einer Aufnahme 19 festgelegt ist. Um ein großes nutzbares Magnetvolumen unterzubringen, sind zweckmäßig die Innenseiten der Greiferarme 7 mit Vertiefungen 20 geformt. Gegebenenfalls sind die Fußteile 18 in den Aufnahmen 19 verstellbar.

In der in Fig. 7 gezeigten Freigabestellung ist der ovale oder elliptische Steuernocken 21 in einer Drehposition, in der die Verlängerungen 7b einander maximal angenähert sind. Die beiden Permanentmagneten P1, P2 sind voneinander entfernt und beaufschlagen einander mit einer Abstoßkraft F1. Dabei schließen die ebenen Abstoßflächen der Permanentmagneten P1, P2 miteinander einen spitzen Winkel ein, der sich in Richtung von den Achsen 5 weg öffnet.

In der in Fig. 8 gezeigten Behälter-Greifstellung des Klammergreifers K2 ist der Steuernocken 21 so verdreht, dass er im Wesentlichen mit seiner größten Dimension zwischen den Verlängerungen 7b wirkt und die Blattfedern 23 sowie die Druckfederkissen 24 geringfügig deformiert und den Behälter B mit einer vorbestimmten Greifkraft hält. Die Permanentmagneten P1, P2 sind einander angenähert, so dass zwischen ihnen ein Luftspalt L1 mit einer Dimension beispielsweise y1 vorliegt und eine relativ große Abstoßkraft F2 wirksam ist. Die beiden Greiferarme 7 sind einander bis auf ein Spaltmaß x1 angenähert.

In der in Fig. 9 gezeigten extremen Schließstellung des Klammergreifers K2 sind bei Abwesenheit eines Behälters B die Greiferarme 7 einander bis auf ein Spaltmaß x2 angenähert, das kleiner ist als das Spaltmaß x1, und sind auch die beiden Permanentmagneten bis auf einen kleineren Luftspalt y2 als der Luftspalt y1 einander angenähert. Es wirkt die maximale Abstoßkraft F3.

Bei den gezeigten Ausführungsformen können die Greiferarme 7 auch auf einer gemeinsamen Achse schwenkbar gelagert sein. Ferner könnten die Abstoßflächen A der Permanentmagneten P1, P2 jedes Paares gegebenenfalls konvex gerundet sein, um eine andere Verlaufscharakteristik der Abstoßkraft zu erzielen. Bei der in den Fig. 7 bis 9 gezeigten Ausführungsform könnten die Permanentmagneten P1 auch direkt in den Greiferarmen eingebettet sein, vorausgesetzt, das Material der Greiferarme 7 ist nicht magnetisch, z.B. Edelstahl. Ferner ist es möglich, nur einen Greifarm 7 schwenkbar zu lagern und den anderen an der Tragstruktur zu fixieren.

## Patentansprüche

1. Klammergreifer (K1) für ein Gefäß-Transportsystem, insbesondere für ein Flaschen-Transportsystem, mit zwei Greiferarmen (7), die um eine oder um zwei Achsen (5)- zwischen einer Greifstellung und einer Freigabestellung schwenkbar sind, wobei jeder Greiferarm (7) eine über die Achse (5) hinausstehende Verlängerung (7b) aufweist, und die Greiferarme (7) in Richtung zur Greifstellung durch einen zwischen den Verlängerungen (7b) angeordneten Kraftspeicher federnd beaufschlagt sind, **dadurch gekennzeichnet, dass** der Kraftspeicher mindestens ein Paar Permanentmagneten (P1, P2) aufweist, die mit ihren Südpolen oder Nordpolen zueinander weisen und eine Abstoßkraft erzeugen, und dass der Klammergreifer (K1) ungesteuert und gegen die Abstoßkraft der Permanentmagneten (P1, P2) von einem zu ergreifenden oder freizugebenden Gefäß jeweils aus der Greifstellung aufdrückbar ist.

2. Klammergreifer nach Anspruch 1, **dadurch gekennzeichnet, dass** die Permanentmagneten (P1, P2) zumindest überwiegend seltene Erden enthalten, wie z.B. Neodym, Samarium, oder dgl.

3. Klammergreifer nach Anspruch 1, **dadurch gekennzeichnet, dass** jeder Permanentmagnet (P1, P2) in nicht-magnetisches Material, vorzugsweise Edelstahl, eingekapselt ist.

4. Klammergreifer nach Anspruch 1, **dadurch gekennzeichnet, dass** die Permanentmagneten (P1, P2) des Paares an Endbereichen der starren Verlängerungen (7b) der Greiferarme (7) angebracht sind, vorzugsweise derart, dass die Achse (5) in etwa in der Mitte zwischen dem Greifbereich (9) und den Permanentmagneten (P1, P2) liegt.

5. Klammergreifer nach Anspruch 1, **dadurch gekennzeichnet, dass** die eben gestalteten Abstoßflächen (A) der Permanentmagneten (P1, P2) des Paares in der Greifstellung im Wesentlichen zueinander parallel, vorzugsweise unter einem spitzen, sich in Richtung von der Achse weg öffnenden Winkel kleiner 20°, liegen, und in der Freigabestellung einander unter einem sich in Richtung zu den Achsen öffnenden spitzen Winkel größer 20° einander maximal angenähert, vorzugsweise, sogar in Kontakt gebracht, sind.

6. Klammergreifer nach Anspruch 3, **dadurch gekennzeichnet, dass** der Permanentmagnet (P1, P2) zylinderförmig und in einem am Greiferarm (7) befestigten Kapselgehäuse (12) geborgen ist, das aus einem Topf (14) mit einem dünnwandigen, der Abstoßfläche (A) des Permanentmagneten (P1, P2) zugewandten Topfboden (15) und einem am offenen Topfende angebrachten, vorzugsweise in das offene Topfende eingeschweißten, dickwandigen Deckel (16) besteht.

7. Klammergreifer nach Anspruch 6, **dadurch gekennzeichnet, dass** zwischen dem Deckel (16) und dem Permanentmagneten (P1, P2) ein Füllkörper (17) eingesetzt ist.

8. Klammergreifer nach Anspruch 1, **dadurch gekennzeichnet, dass** die Verlängerung (7b) gegenüber dem Greiferarm (7) schräg abgekröpft ist, derart, dass das Kapselgehäuse (12) unterhalb der Unterseite des Greiferarms (7) bzw. unterhalb der Oberseite einer Tragplatte (4) positioniert ist, auf der jeder Greiferarm (7) um eine eigene Achse (5) schwenkbar ist.

9. Klammergreifer nach Anspruch 3, **dadurch gekennzeichnet, dass** jeder Permanentmagnet (P1, P2) zylindrisch und in einem Kapselgehäuse (12) geborgen ist.

10. Klammergreifer nach einem der Ansprüche 1 bis 9, **dadurch gekennzeichnet, dass** ein Greiferarm (7) schwenkbar und der andere Greiferarm (7) an einer Tragstruktur (1) fixiert ist.

11. Klammergreifer nach Anspruch 10, **dadurch gekennzeichnet, dass** mindestens ein Permanentmagnet (P1, P2) an der Tragstruktur (1) fixiert ist.

## Claims

1. Claw (K1) for a container transport system, particularly for a bottle transport system, comprising two grip arms (7) which can be swivelled about one axis or about axes (5) between a grip position and a release position, wherein each grip arm (7) has extension protruding beyond the axis (5), the grip arms (7) being resiliently actuated in a direction towards the grip position by a force accumulator arranged between the extensions (7b), **characterized in that** the force accumulator comprises at least one pair of permanent magnets (P1, P2), which face towards each other with their south poles or north poles and generate a repelling force, and that the claw (K1) can be pressed open non-controlled and counter to the repelling force of the permanent magnets (P1, P2) out of the grip position by a container which is to be griped or which is to be released.

2. Claw according to claim 1, **characterized in that** the permanent magnets (P1, P2) contain at least predominantly rare earths, like e.g. neodymium, samarium, or the like.

3. Claw according to claim 1, **characterized in that** each permanent magnet (P1, P2) is encapsulated in non-magnetic material, preferably stainless steel.

4. Claw according to claim 1, **characterized in that** the permanent magnets (P1, P2) of the pair are mounted at end sections of the rigid extensions (7b) of the grip arms (7), preferably such that the axis (5) is located substantially in the middle between the gripping region (9) and the permanent magnets (P1, P2).

5. Claw according to claim 1, **characterized in that** the planar repelling surfaces (A) of the permanent magnets (P1, P2) of the pair lie in the grip position substantially parallel to each other, preferably with an acute angle smaller than 20°, which acute angle opens in the direction away from the axis (5), and in the release position are maximally approached to an other under an acute angle larger than 20°, the acute angle opening in the direction towards the axis, preferably, even are brought in mutual contact.

6. Claw according to claim 3, **characterized in that** the permanent magnet (P1, P2) has the shape of a cylinder and is accommodated in an encapsulating housing (12) attached to the grip arm (7), the encapsulating housing (12) consisting of a pot (14) having a thin-walled pot bottom (15) facing to the repelling surface (A) of the permanent magnet (P1, P2) and a thick-walled cover lid (15) attached at the open pot end, preferably welded into the open pot end.

7. Claw according to claim 6, **characterized in that** a filling body (17) is inserted between the cover lid (16) and the permanent magnet (P1, P2).

8. Claw according to claim 1, **characterized in that** the extension (7b) is cranked in inclined fashion relative to the grip arm (7), such that the encapsulating housing (12) is positioned below the lower side of the grip arm (7) or below the upper side of a carrying plate (4), on which carrying plate (4) each grip arm (7) is pivotable about an own axis (5).

9. Claw according to claim 3, **characterized in that** each permanent magnet (P1, P2) has the shape of a cylinder and is accommodated in an encapsulating housing (12).

10. Claw according to any of the claims 1-9, **characterized in that** one grip arm (7) is pivotable and that the other grip arm (7) is fixed at a carrying structure (1).

11. Claw according to claim 10, **characterized in that** at least one permanent magnet (P1, P2) is fixed at the carrying structure (1).

## Revendications

1. Pince de serrage (K1) pour un système de transport de récipients, en particulier pour un système de transport de bouteilles, avec deux bras de pince (7) qui sont aptes à pivoter sur un ou deux axes (5) entre une position de serrage et une position de libération, étant précisé que chaque bras (7) présente un prolongement (7b) qui dépasse de l'axe (5), et que les bras (7) sont contraints par ressort en direction de la position de serrage grâce à un accumulateur d'énergie disposé entre les prolongements (7b), **caractérisée en ce que** l'accumulateur d'énergie comprend au moins une paire d'aimants permanents (P1, P2) qui sont dirigés l'un vers l'autre avec leurs pôles sud ou leurs pôles nord et qui produisent une force de répulsion, et **en ce que** la pince de serrage (K1) est apte à être ouverte de manière non commandée et à l'encontre de la force de répulsion des aimants permanents (P1, P2), à partir de la position de serrage, par un récipient à prendre ou à libérer.

2. Pince de serrage selon la revendication 1, **caractérisée en ce que** les aimants permanents (P1, P2) contiennent au moins principalement des terres rares, comme par exemple du néodyme, du samarium ou un élément similaire.

3. Pince de serrage selon la revendication 1, **caractérisée en ce que** chaque aimant permanent (P1, P2) est enrobé dans un matériau non magnétique, de préférence de l'acier fin.

4. Pince de serrage selon la revendication 1, **caractérisée en ce que** les aimants permanents (P1, P2) de la paire sont fixés aux zones d'extrémité des prolongements rigides (7b) des bras de pince (7), de préférence de telle sorte que l'axe (5) se trouve à peu près à mi-distance entre la zone de serrage (9) et les aimants permanents (P1, P2).

5. Pince de serrage selon la revendication 1, **caractérisée en ce que** les surfaces de répulsion (A) de forme plane des aimants permanents (P1, P2) de la paire, dans la position de serrage, sont globalement parallèles, de préférence avec un angle aigu, qui va en s'ouvrant en s'éloignant de l'axe, de moins de 20°, et dans la position de libération sont rapprochées au maximum l'une de l'autre avec un angle aigu, qui va en s'ouvrant en direction des axes, de plus de 20°, et sont même de préférence amenées en contact.

6. Pince de serrage selon la revendication 3, **caractérisée en ce que** l'aimant permanent (P1, P2) est cylindrique et est caché dans un boîtier (12) qui est fixé au bras de pince (7) et qui se compose d'un godet (14) avec un fond (15) à paroi mince tourné vers la surface répulsive (A) de l'aimant permanent (P1, P2) et un couvercle (16) à paroi épaisse qui est fixé à l'extrémité de godet ouverte, et de préférence soudé dans l'extrémité de godet ouverte.

7. Pince de serrage selon la revendication 6, **caractérisée en ce qu'**un corps de remplissage (17) est placé entre le couvercle (16) et l'aimant permanent (P1, P2).

8. Pince de serrage selon la revendication 1, **caractérisée en ce que** le prolongement (7b) est coudé en biais par rapport au bras de pince (7) de telle sorte que le boîtier (12) soit positionné au-dessous du côté inférieur du bras (7) ou au-dessous du côté supérieur d'une plaque de support (4) sur laquelle chaque bras (7) est apte à pivoter sur son axe (5) propre.

9. Pince de serrage selon la revendication 3, **caractérisée en ce que** chaque aimant permanent (P1, P2) est cylindrique et est caché dans un boîtier (12).

10. Pince de serrage selon l'une des revendications 1 à 9, **caractérisée en ce qu'**un bras de pince (7) est apte à pivoter tandis que l'autre bras de pince (7) est fixé à une structure de support (1).

11. Pince de serrage selon la revendication 10, **caractérisée en ce qu'**au moins un aimant permanent (P1, P2) est fixé à la structure de support (1).
